# FASCICULE DE BREVET EUROPEEN

(11) **EP 0 830 232 B1**
(45) Date de publication et mention de la délivrance du brevet: **25.08.1999**
(21) Numéro de dépôt: 96920907.1
(22) Date de dépôt: 06.06.1996
(51) Int. Cl.: B23K 26/00

(54) **INSTALLATION POUR TRAVAILLER UNE ZONE D'UN TUBE AU MOYEN D'UN FAISCEAU LASER ET APPLICATION AUX TUBES D'UNE CANALISATION SUR UNE BARGE DE POSE EN MER OU DE RECUPERATION DE CETTE CANALISATION**
LASERANLAGE ZUM BEHANDELN EINES ROHRTEILES, UND VERWENDUNG FÜR ROHRE EINER KANALISATION EINES MEERWERKSCHIFFES, ODER VERWENDUNG FÜR DIE ZURÜCKHOLUNG DIESER KANALISATION
APPARATUS FOR WORKING ON A TUBE PORTION USING A LASER BEAM, AND USE THEREOF ON PIPE TUBES ON A MARINE PIPE-LAYING OR PIPE RECOVERY BARGE

(30) Priorité: 09.06.1995 FR 9506827
(43) Date de publication de la demande: 25.03.1998
(73) Titulaire: BOUYGUES OFFSHORE, 78180 Montigny-le-Bretonneux (FR)
(72) Inventeur: GAINAND, Yves, F-78310 Maurepas (FR); MARECHAL, Alain, F-78370 Plaisir (FR); MAS, Jean-Paul, F-91360 Villemoisson-sur-Orge (FR)
(74) Mandataire: Schrimpf, Robert
(86) Numéro de dépôt international: FR9600852
(87) Numéro de publication internationale: WO9641697

(56) Documents cités:
- FR-A- 2 704 166
- US-A- 4 623 229

## Description

La présente invention concerne une installation pour réaliser un travail dans une zone de la paroi d'un tube au moyen d'un faisceau laser dirigé vers ladite zone et que l'on déplace pour balayer la zone.

Ce travail est par exemple un travail de découpe, de soudure ou de traitement de surface.

De nombreux dispositifs ont été proposés pour réaliser ces travaux. Ils comprennent pour l'essentiel un générateur de faisceau laser, une tête de travail comportant un moyen de focalisation du faisceau laser et une buse de sortie du faisceau focalisé, un guide d'ondes pour guider le faisceau laser depuis le générateur jusqu'à la tête de travail, et des moyens pour déplacer la tête de travail en sorte que le faisceau laser parcoure la zone à travailler.

Dans certaines applications, les moyens pour déplacer la tête de travail comprennent un support qui porte la tête de travail et qui tourne sur lui-même en sorte que la tête de travail tourne autour du tube, par exemple pour découper le tube ou pour souder deux tubes bout à bout.

Le support qui porte la tête de travail doit donc être positionné de façon précise par rapport au tube en sorte que l'axe de rotation du support ait une position définie par rapport au tube, au moins approximativement coaxiale au tube.

La publication FR-A-2 704 166 décrit une installation telle que définie dans le préambule de la revendication 1 et dans laquelle le support rotatif est monté sur une platine directement fixée sur le tube, mais cette solution ne convient pas lorsque le tube est soumis à des mouvements et des vibrations pendant le travail, ce qui est le cas notamment des tubes d'une canalisation en cours de pose en mer à partir d'une barge. Il est en effet tout à fait néfaste pour le travail avec un faisceau laser que les vibrations du tube puissent être transmises à la tête de travail et au guide du faisceau.

Pour réaliser une canalisation en mer, on procède sur la "rampe de pose" de la barge à la soudure de tubes de longueurs transportables, en général de 10 à 24 m. Après soudure d'un tube, la barge est avancée de la longueur de ce tube, la canalisation étant posée au fur et à mesure derrière la barge. Cette barge est maintenue en place par des lignes d'ancre et déplacée par des treuils. Elle est bien entendue soumise aux mouvements de la mer et sa position n'est pas tout à fait fixe lors de la soudure alors que la position de la canalisation, qui repose sur le fond de la mer, est pratiquement constante suivant son axe. Il y a donc en permanence des mouvements entre barge et canalisation dans le sens de l'axe de la canalisation, ce qui entraîne en outre des vibrations.

Un but de la présente invention est de positionner de façon précise par rapport au tube le support rotatif qui porte la tête de travail, sans que les vibrations du tube soient transmises à la tête de travail et au guide d'ondes qui relie cette tête au générateur du faisceau laser.

Ce but est atteint, selon l'invention, en plaçant le dispositif sur un bâti qui porte à rotation le support de la tête de travail et en logeant le dispositif et son bâti dans un conteneur qui présente des ouvertures pour être traversé par le tube et des moyens pour être fixé provisoirement au tube, ce conteneur portant également les armoires de commande et haute-fréquence du générateur laser, en sorte que le support rotatif n'est fixé au tube que par l'intermédiaire du conteneur dont la masse ainsi que celle de son contenu amortit considérablement la transmission des sollicitations du tube à la tête de travail et au guide d'ondes.

L'absence de fixation directe entre le support rotatif de la tête et le tube présente aussi l'avantage d'une grande facilité d'adaptation du système à des tubes ayant des diamètres différents,

En plaçant les armoires de commande et haute fréquence du générateur laser à poste fixe dans le conteneur où le bâti qui porte le générateur est également fixe pendant le soudage, on est sûr que le câble haute-fréquence qui relie l'armoire haute-fréquence au générateur ne subit aucune sollicitation mécanique pendant le soudage, ce qui est très important.

L'invention concerne également une réalisation particulière préférée de la tête de travail.

Dans cette réalisation, la tête de travail comprend un châssis, fixé d'une part au support rotatif qui porte la tête et d'autre part à l'extrémité du guide d'ondes, et un ensemble déplaçable monté à translation sur le châssis et qui comporte le moyen de focalisation du faisceau laser provenant du guide d'ondes et la buse de sortie de ce faisceau, l'axe de ladite translation étant celui du faisceau laser incident sur le moyen de focalisation et étant parallèle à l'axe de rotation du support de la tête, ledit châssis portant en outre un moteur apte à provoquer la translation du dit ensemble sous l'effet d'une commande appropriée.

Il est en effet parfois nécessaire d'imposer au faisceau laser qui sort de la buse de la tête de travail de petits déplacements au cours de sa rotation autour du tube.

Dans le cas par exemple d'un travail de soudure de deux tubes bout à bout, la zone d'aboutement des tubes que doit balayer le faisceau laser n'est pas une génératrice circulaire parfaite alors que la tête tourne sur un cercle et le dispositif doit comporter des moyens pour imposer au faisceau qui sort de la tête de petits déplacements correctifs au cours du déplacement circulaire de la tête.

La translation sur le châssis de la tête de l'ensemble constitué par le moyen de focalisation et la buse permet de réaliser une correction de "suivi de joint" sans que cette correction nécessite de déplacer le guide d'ondes puisque le châssis sur lequel coulisse cet ensemble et auquel est fixé le guide d'ondes reste fixe pendant ce déplacement correctif

En outre, par une programmation appropriée de la commande du moteur qui provoque la translation dudit ensemble, on peut imposer au faisceau laser qui sort de la tête un mouvement volontaire d'oscillation qui convient pour souder avec un métal d'apport, ce qui permet de souder des tubes chanfreinés ayant une épaisseur importante, sans avoir à augmenter la puissance du laser, ainsi que des tubes dont le matériau ne permet normalement pas d'être soudé au moyen d'un faisceau laser,

On décrira ci-après un mode de réalisation d'une installation conforme à l'invention conçue pour souder bout à bout des tubes sur une barge de pose en mer d'une canalisation, en référence aux figures du dessin joint sur lequel :
- la fig. 1 est un schéma général de l'installation vu en élévation;
- la fig. 2 est une vue schématique en plan de l'installation ;
- les figs. 3 à 5 sont desschémas du bâti équipé du générateur laser, du guide d'ondes, de la tête de travail et du support rotatif de la tête de travail, respectivement en vue de face (fig. 3), en vue de dessus (fig. 4) et en vue de côté (fig. 5) ;
- la fig. 6 est un schéma des moyens de motorisation du support rotatif de la tête de travail;
- la fig. 7 est une vue qui reproduit à main gauche la fig. 3 et, à main droite le même dispositif réglé pour le travail d'un tube de diamètre différent;

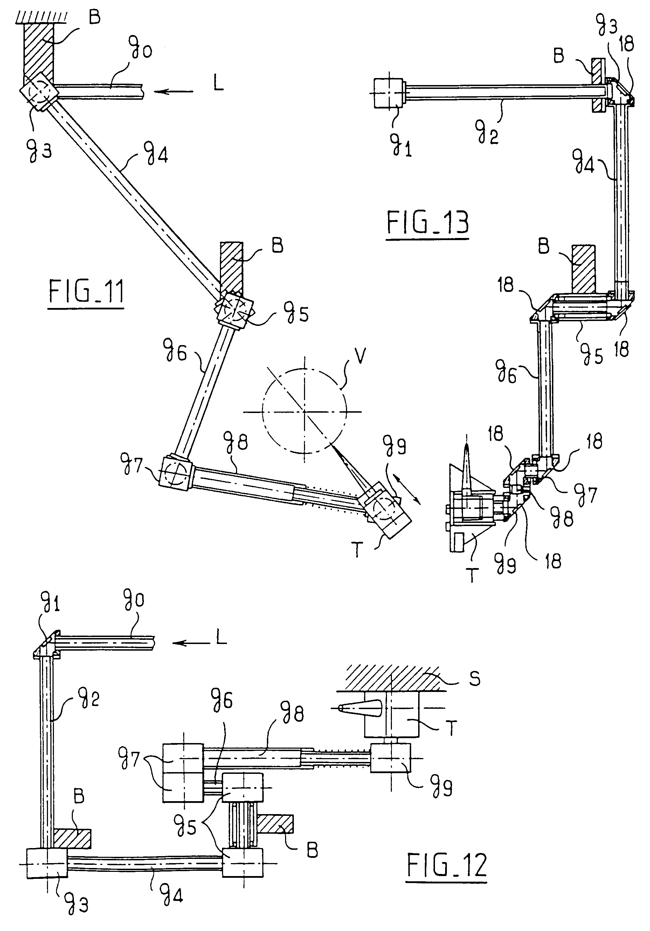

- les figs. 8 à 10 sont des vues schématiques de la tête de travail, respectivement selon les plans de coupe A-A (fig. 8), B-B (fig. 9) et C-C (fig. 10), et les figs. 11 à 13 sont des vues schématiques du guide d'ondes et de la tête de travail, en vue de face (fig. 11), en vue de dessus (fig. 12) et en vue de côté (fig. 13).

La description qui suit et les figures annexées feront apparaître d'autres caractéristiques de la présente invention.

L'installation représentée sur les figures comprend essentiellement un conteneur C, et un bâti B qui porte un dispositif constitué d'un générateur de faisceau laser L, d'un guide d'ondes G, d'une tête de travail T et d'un support rotatif S.

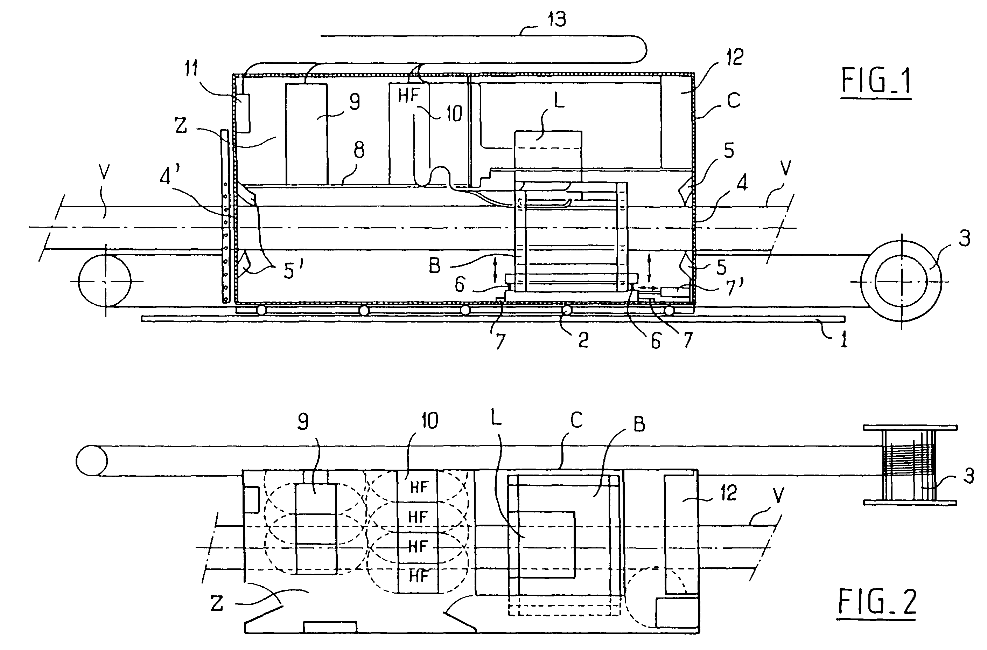

Le conteneur C (fig. 1,2) qui contient le bâti et le dispositif porté par le bâti est monté sur une barge symbolisée par un rail de guidage 1 de façon à pouvoir être déplacé longitudinalement sur la barge selon l'axe de la canalisation, par exemple en étant monté sur des roues 2 et déplacé à la demande par un treuil 3 à tension constante, ou par motorisation des roues. Il présente une entrée 4 et une sortie 4' pour le passage des tubes V et il comporte des moyens pour permettre sa fixation avec amortissement sur les tubes qui le traversent. Ces moyens simplement schématisés en 5,5' sont par exemple des butées ou des mâchoires munies de patins amortisseurs et actionnées par des vérins solidaires du conteneur de façon à pincer les tubes entre elles,

A titre indicatif, dans un exemple typique, le conteneur est un caisson d'une longueur de l'ordre de 10 m, d'une hauteur de l'ordre de 5 m et d'une largeur de l'ordre de 3 m. Il comporte en tant que de besoin des ouvertures ou des trappes de visite et des moyens sont prévus pour commander et observer depuis l'extérieur du conteneur les organes commandables qui se trouvent à l'intérieur du conteneur.

Le bâti B est disposé dans le conteneur de façon à pouvoir être réglé en hauteur au moyen de vérins 6 et être déplacé longitudinalement pour régler sa position le long des tubes par rapport à l'endroit de la soudure à réaliser, Dans la solution représentée, le bâti glisse sur des glissières 7 au moyen de vérins 7' sur une course de quelques dizaines de millimètres. Le conteneur contient en outre un plancher 8 sur lequel sont disposées des armoires de commande 9 et de haute fréquence 10 du générateur laser L. Le conteneur est également équipé de moyens de climatisation 11 de la zone Z du conteneur qui contient les armoires 9 et 10 et de moyens de réfrigération 12 de l'armoire haute-fréquence et du générateur laser.

Des ombilics 13 amènent au conteneur l'eau, le gaz et l'électricité, en tant que de besoin.

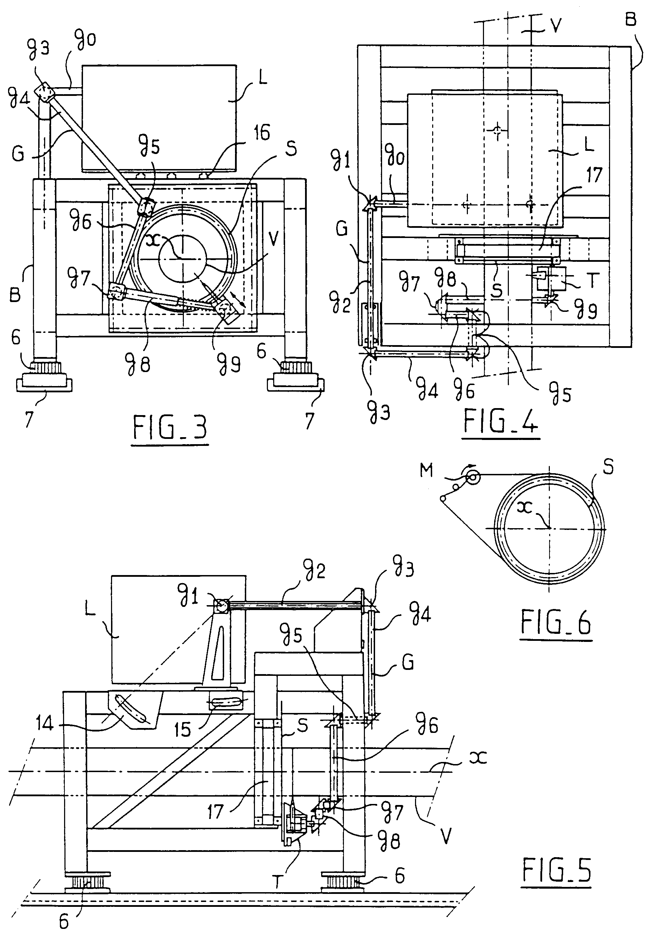

Le bâti, très rigide, supporte le générateur laser L (figs. 3-5) et des moyens (14, 15, 16) sont prévus pour pouvoir régler à la demande le niveau et l'assiette du générateur sur le bâti de façon que le faisceau laser ait à la sortie du générateur l'orientation qui convient.

Le bâti B porte également une platine 17 sur laquelle est monté à rotation autour d'un axe horizontal x un plateau vertical S qui sert de support à une tête T reliée par un guide d'ondes G au générateur laser L. La platine et le plateau tournant présentent un passage central pour les tubes V. La rotation du plateau est commandée par un moteur M et une courroie de transmission (fig. 6).

Le guide d'ondes est constitué de façon en sol connue d'une suite de tronçons rectilignes g₀, g₂, g₄, g₆, g₈ reliés de proche en proche par des articulations g₁, g₃, g₅, g₇, g₉. Chaque articulation est constituée d'un coude comportant un miroir qui dévie le faisceau laser de 90° ou de deux coudes en vis à vis comportant chacun un miroir déviateur et reliés l'un à l'autre directement ou par l'intermédiaire d'un tronçon rectiligne court,

Toutes les articulations sont à des emplacements fixes sur le bâti à l'exception de la dernière articulation g₉ qui est solidaire de la tête et se déplace avec elle et de l'avant-dernière articulation g₇ qui est double, qui est reliée à la dernière articulation g₉ par un tronçon rectiligne télescopique g₈ et à l'articulation précédente g₅ par un autre tronçon rectiligne g₆, les tronçons rectilignes g₆ et g₈ constituant comme les branches d'un compas dont le sommet est l'articulation double g₇.

Ce guide d'onde est préféré selon l'invention car il comporte un minimum de pièces mobiles mais l'homme de métier pourra choisir d'autres types de guide d'ondes pour telle ou telle raison particulière.

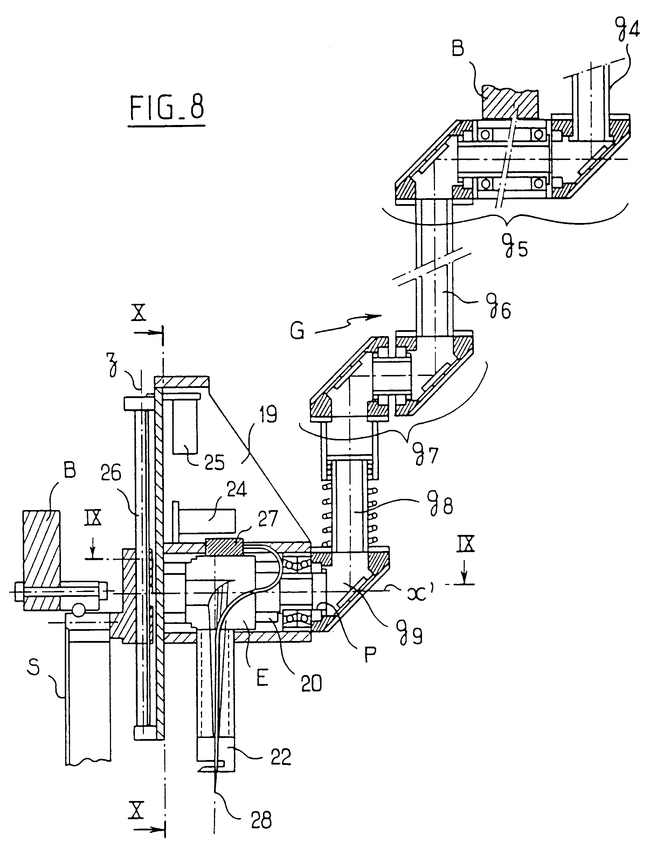

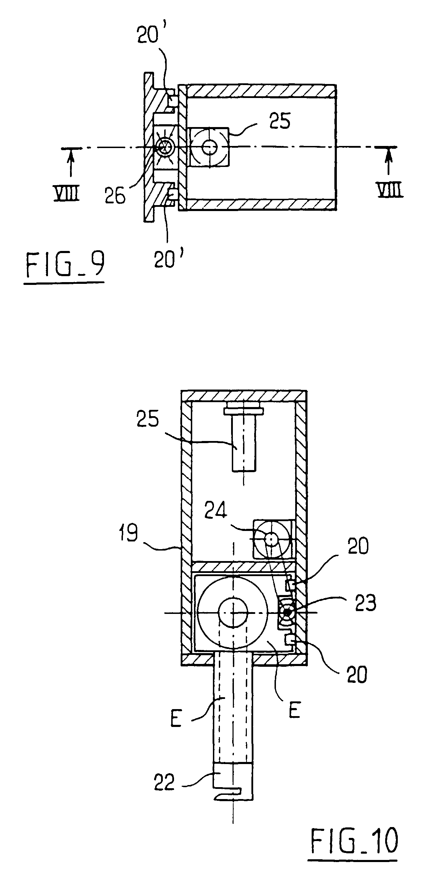

La tête de travail T (figs 8-10) est constituée selon l'invention d'un châssis 19 qui porte une glissière 20 pour un ensemble mobile E qui comporte un miroir de focalisation parabolique 21 et une buse de sortie 22 pour le faisceau focalisé. Le châssis est conçu pour être fixé à l'extrémité du guide d'ondes G en sorte que le faisceau laser provenant du guide d'ondes pénêtre dans le châssis en direction du miroir parabolique selon l'axe de translation x' de l'ensemble E et le châssis 19 est d'autre part fixé au support tournant S en sorte que l'axe de translation x' soit parallèle à l'axe de rotation x du support tournant. La translation de l'ensemble mobile E est provoquée par une vis à bille 23 entraînée par un moteur 24 monté sur le châssis. Le moteur 24 est commandé par des moyens en soi connus (non représentés), à partir des signaux fournis par un détecteur de joint fixé à la tête, de façon que le faisceau laser qui sort de la buse soit ramené s'il y a lieu sur le joint entre les deux tubes à souder ("suivi de Joint").

Le châssis 19 est fixé à l'extrémité du guide d'ondes (G) par tout moyen approprié permettant un pivotement relatif du châssis et du guide d'ondes autour de l'axe x' du faisceau laser. On a schématisé ce moyen de fixation par une bague (P) sur la fig. 8.

Le châssis 19 est fixé au plateau tournant S de façon à pouvoir se déplacer par translation sur le plateau sur des glissières 20' suivant un axe z coplanaire au plan déterminé par les axes x' et x et perpendiculaire à ces axes, Ce déplacement est commandé par un moteur 25 monté sur le châssis 19 et qui actionne une vis à billes 26. Ce moteur est commandé de façon en soi connue à partir des signaux fournis par le détecteur de joint de façon que la distance entre le point de focalisation du faisceau laser et la surface extérieure du joint soit celle qui convient pour un soudage correct ("suivi de peau").

On notera que pendant le soudage la longueur du guide d'ondes est sensiblement constante, la seule modification de longueur étant dûe à la variation de longueur de la branche télescopique due au mouvement de la tête pour le suivi de peau. variation qui est au plus de l'ordre du centimètre.

Selon une particularité avantageuse de l'invention, l'ensemble mobile E comporte également un distributeur 27 pour distribuer un métal d'apport 28 à l'endroit du soudage.

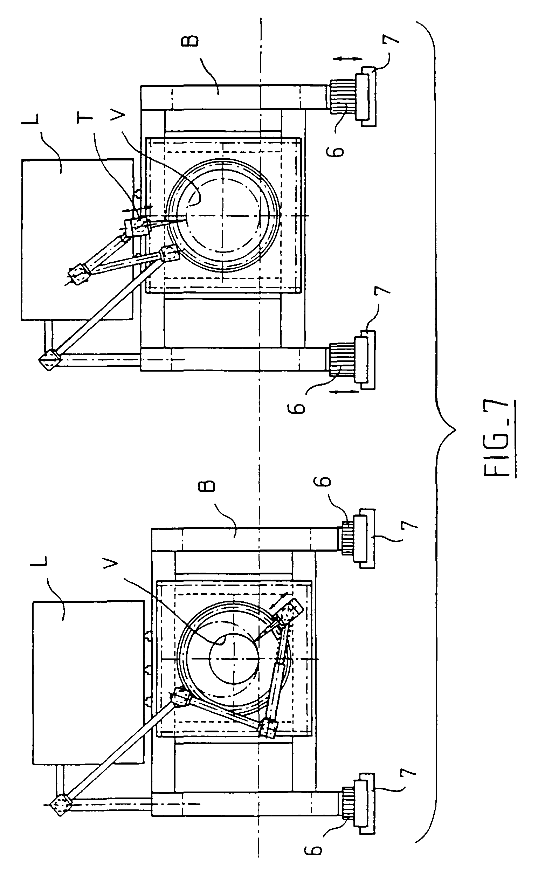

Sur une barge de pose d'une canalisation en mer, on réalise les opérations suivantes pour souder et poser cette canalisation :
- on présente le tube à souder à l'extrémité du dernier tube de la canalisation et on bloque ces tubes entre eux dans une position adéquate pour réaliser la soudure par un moyen connu en soi, de préférence des mâchoires de blocage intérieurs ("clamp") ;
- on déplace le conteneur pour amener la tête de soudure au voisinage de la zone de soudure à réaliser et on actionne les moyens de fixation entre canalisation et conteneur,
- on règle la position du bâti pour que la tête de travail soit dans une position adéquate pour commencer le soudage du joint, en tenant compte du diamètre des tubes (figures 1 à 7),
- on réalise la soudure du joint,
- on avance la barge dans le sens de la canalisation pour poser en mer la longueur supplémentaire de celle-ci qui vient d'être soudée,
- on présente le nouveau tube à souder et on le bloque à l'extrémité de la canalisation en ramenant les mâchoires de blocage intérieures à l'emplacement du nouveau joint à réaliser,
- on débloque le conteneur qui était resté fixé sur la canalisation à l'emplacement de la soudure précédente et on le ramène à la nouvelle position adéquate. Il est précisé que le déblocage du conteneur peut avoir lieu avant que la barge ait fini son avancement pour limiter les déplacements du conteneur et accélérer les cadences,
- on effectue la soudure du nouveau joint.

Les mêmes opérations que ci-dessus peuvent être réalisées en sens inverse, en approvisionnant la buse de sortie du faisceau laser en gaz adéquat, lorsque l'on veut remonter une canalisation posée en mer en la coupant en tronçons de longueur adéquate.

## Revendications

1. Installation pour exécuter un travail dans une zone de la paroi d'un tube au moyen d'un faisceau laser dirigé vers ladite zone, cette installation comportant un dispositif qui comprend un générateur de faisceau laser (L), une tête de travail (T) comportant un moyen de focalisation (21) du faisceau laser et une buse de sortie (22) du faisceau focalisé, un guide d'ondes (G) pour guider le faisceau laser depuis le générateur jusqu'à la tête de travail, et un support rotatif (S) pour déplacer la tête de travail autour d'un axe (X), cette installation comprenant un bâti (B) qui porte ledit générateur de faisceau laser (L) et ledit guide d'ondes (G), caractérisé en ce que ledit bâti (B) porte à rotation le support (S) de la tête de travail (T) et en ce que l'installation est contenue dans un conteneur (C) qui contient également les armoires (9, 10) de commande et haute-fréquence du générateur laser et qui présente des ouvertures (4, 4') pour le passage du tube et des moyens (5, 5') pour la fixation provisoire du conteneur au tube, en sorte que la masse du conteneur ainsi que celle de son contenu amortissent la transmission des sollicitations du tube à la tête de travail et au guide d'ondes.

2. Installation selon la revendication 1, dans lequel le conteneur est fixé au tube par l'intermédiaire de moyens d'amortissement.

3. Installation selon l'une des revendication 1 et 2, et qui comprend des moyens (6, 6') pour régler le niveau du bâti dans le conteneur en fonction du diamètre des tubes.

4. Installation selon l'une des revendications 1 à 3 et qui comporte des moyens (7, 7') pour déplacer longitudinalement le bâti dans le conteneur, afin de régler sa position par rapport à l'endroit du travail.

5. Installation selon l'une des revendications 1 à 4, dans laquelle le conteneur comporte une zone climatisée Z où sont portées sur un plancher les armoires de commande et haute-fréquence (9, 10) du générateur laser.

6. Installation selon l'une des revendications 1 à 5, dans laquelle la tête de travail (T) comprend un châssis (25), fixé d'une part au dit support rotatif (S) et d'autre part à l'extrémité du guide d'ondes (G), et un ensemble déplaçable (E) monté à translation sur le châssis et qui comporte le moyen de focalisation (21) du faisceau laser provenant du guide d'ondes et la buse de sortie (22) de ce faisceau, l'axe (x') de ladite translation étant celui du faisceau laser incident sur le moyen de focalisation et étant parallèle à l'axe de rotation (x) du support rotatif (S), ledit châssis portant en outre un moteur (24) apte à provoquer la translation dudit ensemble (E) sous l'effet d'une commande appropriée.

7. Installation selon l'une des revendications 1 à 6, dans laquelle la tête de travail comporte un distributeur (27) de métal d'apport pour un travail de soudure,

8. Installation selon les revendications 6 et 7, dans laquelle le distributeur (27) de métal d'apport est fixé au dit ensemble (E).

9. Application d'une installation selon l'une des revendications 1 à 8 à la soudure ou à la découpe des tubes d'une canalisation sur une barge de pose en mer ou de récupération de cette canalisation.

## Claims

1. An installation for working on a zone of the wall of a tube by means of a laser beam directed towards said zone, the installation comprising apparatus itself comprising a laser beam generator (L), a working head (T) including both means (21) for focusing the laser beam and an outlet nozzle (22) for the focused beam, a waveguide (G) for guiding the laser beam from the generator to the working head, and a rotary support (S) for moving the working head around an axis (x), said installation comprising a stand (B) which carries said laser beam generator (L) and said waveguide (G), the installation being characterized in that said stand (B) carries the rotary support (S) for the working head (T), and in that it is contained in a container (C) which also contains the control and high frequency cabinets (9, 10) for the laser generator, and which has openings (4, 4') through which the tube can pass with means (5, 5') for fixing the container temporarily to the tube, such that the mass of the container together with the mass of its contents damps the transmission of stresses from the tube to the working head and to the waveguide.

2. An installation according to claim 1, in which the container is fixed to the tube via damping means.

3. An installation according to claim 1 or 2, including means (6, 6') for adjusting the level of the stand inside the container as a function of the diameter of the tubes.

4. An installation according to any one of claims 1 to 3, including means (7, 7') for displacing the stand longitudinally inside the container in order to adjust its position relative to the working location,

5. An installation according to any one of claims 1 to 4, in which the container includes an air conditioned zone Z in which the control and high frequency cabinets (9, 10) of the laser generator are disposed on a floor.

6. An installation according to any one of claims 1 to 5, in which the working head (T) includes a chassis (25) fixed firstly to said rotary support (S) and secondly to the end of the waveguide (G), and a movable assembly (E) mounted to move in translation on the chassis and including both the focusing means (21) for focusing the laser beam coming from the waveguide and the outlet nozzle (22) for said beam, the axis (x') of said translation being that of the incident laser beam on the focusing means and being parallel to the axis of rotation (x) of the rotary support (S), said chassis also carrying a motor (24) suitable for driving said assembly (E) in translation under appropriate control.

7. An installation according to any one of claims 1 to 6, in which the working head includes a dispenser (27) for feeding filler metal for welding work.

8. An installation according to claims 6 and 7, in which the filler metal dispenser (27) is fixed to said assembly (E).

9. Application of an installation according to any one of claims 1 to 8 to welding or cutting up tubes of a pipeline on a barge for laying or recovering said pipeline at sea.

## Patentansprüche

1. Anlage für die Behandlung eines Wandabschnittes eines Rohres mit Hilfe eines auf diesen Abschnitt gerichteten Laserstrahls, wobei diese Anlage eine Vorrichtung enthält, die einen Generator (L) für einen Laserstrahl, einen Arbeitskopf (T) mit einem Mittel (21) für die Fokussierung des Laserstrahls und eine Auslaßdüse (22) für den fokussierten Laserstrahl aufweist, sowie einen Hohlleiter (G), um den Laserstrahl von dem Generator zu dem Arbeitskopf zu leiten, und mit einer drehbaren Halterung (S) versehen ist, um den Arbeitskopf um eine Achse (X) zu bewegen, wobei diese Anlage ein Gerüst (B) aufweist, welches den Generator für den Laserstrahl (L) und den Hohlleiter (G) trägt,
**dadurch gekennzeichnet**, **daß**
an dem Gerüst (B) die Halterung (S) des Arbeitskopfes (T) drehbar gelagert ist, und daß diese Anlage in einen Behälter (C) eingesetzt ist, der ebenfalls die Schalt- und Hochfrequenzschränke (9, 10) des Lasergenerators enthält und Öffnungen für den Durchgang des Rohres und Mittel (5, 5') für die provisorische Befestigung des Behälters an dem Rohr aufweist, so daß die Masse des Behälters und seines Inhalts die Übertragung der durch das Rohr verursachten Lasten auf den Arbeitskopf und den Hohlleiter abdämpft.

2. Anlage nach Anspruch 1,
**dadurch gekennzeichnet**, **daß**
der Behälter mittels Stoßdämpfern an dem Rohr befestigt ist.

3. Anlage nach einem der Ansprüche 1 und 2,
**dadurch gekennzeichnet**, **daß**
sie Mittel (6, 6') aufweist, um die Höhe des Gerüstes in dem Behälter je nach dem Durchmesser der zu behandelnden Rohre zu regulieren.

4. Anlage nach einem der Ansprüche 1 bis 3,
**dadurch gekennzeichnet**, **daß**
sie Mittel (7, 7') aufweist, um das Gerüst in dem Behälter in Längsrichtung zu verschieben, um dadurch seine Stellung gegenüber der Arbeitsposition zu regulieren.

5. Anlage nach einem der Ansprüche 1 bis 4,
**dadurch gekennzeichnet**, **daß**
der Behälter eine klimatisierte Zone (Z) aufweist, in der auf einem Boden die Schalt- und Hochfrequenzschränke (9, 10) des Lasergenerators montiert sind.

6. Anlage nach einem der Ansprüche 1 bis 5,
**dadurch gekennzeichnet**, **daß**
der Arbeitskopf (T) ein Gestell (25) aufweist, welches einerseits an der drehbaren Halterung (S) und andererseits an einem Ende des Hohlleiters (G) befestigt ist, sowie eine bewegliche Einheit (E), welche translierend an diesem Gestell befestigt ist und das Mittel für die Fokussierung (21) des aus dem Hohlleiter und der Auslaßdüse (22) austretenden Laserstrahls aufweist, wobei die Achse (x') dieser translierenden Bewegung gleich der Achse des auf das Mittel für die Fokussierung auftreffenden Laserstrahls ist und parallel zu der Rotationsachse (x) der drehbaren Halterung (S) verläuft, und daß dieses Gestell außerdem einen Motor (24) trägt, mit dessen Hilfe die translierende Verschiebung der Einheit (E) mittels einer geeigneten Steuerung bewirkt werden kann.

7. Anlage nach einem der Ansprüche 1 bis 6,
**dadurch gekennzeichnet**, **daß**
der Arbeitskopf ein Mundstück (27) für die Abgabe eines Zusatzschweißwerkstoffs für die Herstellung einer Schweißnaht enthält.

8. Anlage nach einem der Ansprüche 6 und 7,
**dadurch gekennzeichnet**, **daß**
das Mundstück (27) für die Abgabe des Zusatzschweißwerkstoffs an der Einheit (E) befestigt ist.

9. Einsatz einer Anlage nach einem der Ansprüche 1 bis 8 für das Schweißen oder Zuschneiden von Rohren einer Rohrleitung eines Meerwerkschiffes oder die Rückholung einer solchen Rohrleitung.
